# FASCICULE DE BREVET EUROPEEN

(11) **EP 2 155 553 B1**
(45) Date de publication et mention de la délivrance du brevet: **18.05.2011**
(21) Numéro de dépôt: 08826478.3
(22) Date de dépôt: 12.06.2008
(51) Int. Cl.: B64C 27/605

(54) **DISPOSITIF DE COMMANDE DE PALES D'HELICOPTERE OU SIMILAIRE**
VORRICHTUNG ZUR STEUERUNG DER BLÄTTER EINES HELIKOPTERS ODER EINES ÄHNLICHEN FLUGGERÄTES
DEVICE FOR CONTROLLING THE BLADES OF A HELICOPTER OR SIMILAR aircraft

(30) Priorité: 19.06.2007 FR 0704352
(43) Date de publication de la demande: 24.02.2010
(73) Titulaire: UNIVERSITE DE TECHNOLOGIE DE COMPIEGNE, 60200 Compiègne (FR)
(72) Inventeur: DE MIRAS, Jérôme, F-60200 Compiegne (FR); VIDOLOV, Borislav, F-60170 Pimprez (FR)
(74) Mandataire: Parzy, Benjamin Alain
(86) Numéro de dépôt international: PCT/FR2008/000800
(87) Numéro de publication internationale: WO 2009/010644

(56) Documents cités:
- GB-A- 2 032 374
- JP-A- 7 040 896
- US-A- 2 549 313

## Description

L'invention est relative à un nouveau rotor d'hélicoptère ou similaire, et porte plus particulièrement sur la commande du plateau cyclique.

### ARRIERE-PLAN DE L'INVENTION

On connaît des plateaux cycliques qui s'étendent autour du mât rotor, en étant centré sur ledit mât rotor mais tout en pouvant coulisser le long dudit mât rotor. Le plateau cyclique comporte un plateau dit tournant, qui tourne avec le mât rotor, et qui est assujetti à chaque pale par une biellette d'incidence. Le plateau tournant est monté rotatif sur un plateau non tournant (c'est-à-dire qu'il ne tourne pas avec le rotor), qui peut être déplacé longitudinalement le long du mât rotor ou déplacé angulairement autour d'axes perpendiculaires au mât rotor. Le plateau tournant est bien sûr astreint à suivre les déplacements dans l'espace du plateau fixe.

Un déplacement longitudinal du plateau non tournant parallèlement à lui-même le long du mât rotor provoque une commande simultanée de l'incidence de toutes les pales, tandis qu'un déplacement angulaire du plateau non tournant autour d'un axe perpendiculaire au mât rotor provoque une variation cyclique du pas des pales.

Les mouvements du plateau non tournant sont en général effectués à l'aide de trois biellettes de commande attelées au plateau non tournant (sur des attaches rotulaires espacées de 120 degrés l'une de l'autre), les biellettes de commande s'étendant de façon sensiblement parallèle au mât rotor. Les extrémités opposées des biellettes de commande sont attaquées par des renvois de commande directement actionnés par le pilote, via une tringlerie de commande. Les renvois impriment à l'extrémité associée des biellettes de commande des mouvements sensiblement parallèles au mât rotor, de sorte que les biellettes se déplacent globalement parallèlement au mât rotor (aux inclinaisons près du plateau fixe et des renvois).

Sur des hélicoptères de plus gros tonnage, les biellettes de commande sont remplacées par des actionneurs linéaires, hydrauliques ou électriques, qui s'étendent sous le plateau cyclique et dont les tiges d'actionnement télescopiques sont directement attelées au plateau fixe par des attaches rotulaires. Ces tiges s'étendent également parallèlement au mât rotor.

Ce principe de commande est très encombrant en hauteur. Il nécessite de dégager une place suffisante sous le plateau cyclique pour loger les biellettes de commande ou les actionneurs linéaires. En outre, il nécessite de prévoir un arrêt en rotation du plateau non tournant pour l'empêcher de tourner avec le rotor, qui permet néanmoins les mouvements du plateau cyclique.

L'état de la technique est notamment illustré par les documents JP07040896, GB2032374, US2549313.

### OBJET DE L'INVENTION

L'invention a pour objet un rotor et sa commande, particulièrement compacte en hauteur.

### BREVE DESCRIPTION DE L'INVENTION

En vue de la réalisation de ce but, on propose un dispositif de commande de pales d'un rotor d'hélicoptère ou similaire comportant un mât rotor qui supporte les pales, le dispositif de commande comportant :
- un plateau cyclique qui s'étend autour du mât rotor et qui comprend d'une part un plateau non tournant, et d'autre part un plateau tournant qui est monté rotatif sur le plateau non tournant et qui tourne avec le rotor en étant relié aux pales ;
- trois actionneurs pour provoquer le déplacement commandé du plateau tournant à la fois en translation parallèlement au mât rotor et angulairement autour d'axes perpendiculaires au mât rotor.

Selon l'invention, les trois actionneurs sont disposés sensiblement à hauteur du plateau cyclique, dans le prolongement latéral de celui-ci, chaque actionneur comportant une partie mobile qui est directement reliée au plateau fixe pour former avec ce dernier une liaison glissière de sorte qu'un déplacement de la partie mobile de l'un des actionneurs provoque un déplacement de la partie du plateau non tournant associée selon un axe du mât rotor.

Ainsi, la commande est réduite en hauteur substantiellement à la hauteur des actionneurs, ce qui permet un gain substantiel de place. Les liaisons glissières permettent tout à la fois d'assurer les déplacements du plateau cyclique (déplacement vertical et déplacement angulaire) mais également d'arrêter le plateau non tournant en rotation, de sorte qu'il n'est plus nécessaire de prévoir un organe d'antirotation spécifique du plateau non tournant.

Par radial, on entend ici toute direction perpendiculaire à l'axe du mât rotor et qui coupe ledit axe.

### BREVE DESCRIPTION DES DESSINS

L'invention sera mieux comprise à la lumière de la description qui suit en référence aux figures des dessins annexés parmi lesquelles :
- la figure 1 est une vue en perspective d'un rotor et du dispositif de commande associé selon un premier mode particulier de réalisation de l'invention;
- la figure 2 est une vue de détail agrandie de la figure 1, illustrant le plateau qui équipe la commande ;
- la figure 3 est une vue analogue à la figure 2 d'une variante de réalisation du plateau ;
- la figure 4 est une variante de réalisation du dispositif de commande illustré à la figure 1 ;
- la figure 5 est une vue en perspective d'une commande selon un deuxième mode particulier de réalisation de l'invention ;
- la figure 6 est une vue en coupe selon le plan P de la figure 5 qui passe par l'axe du rotor.

### DESCRIPTION DETAILLEE DE L'INVENTION

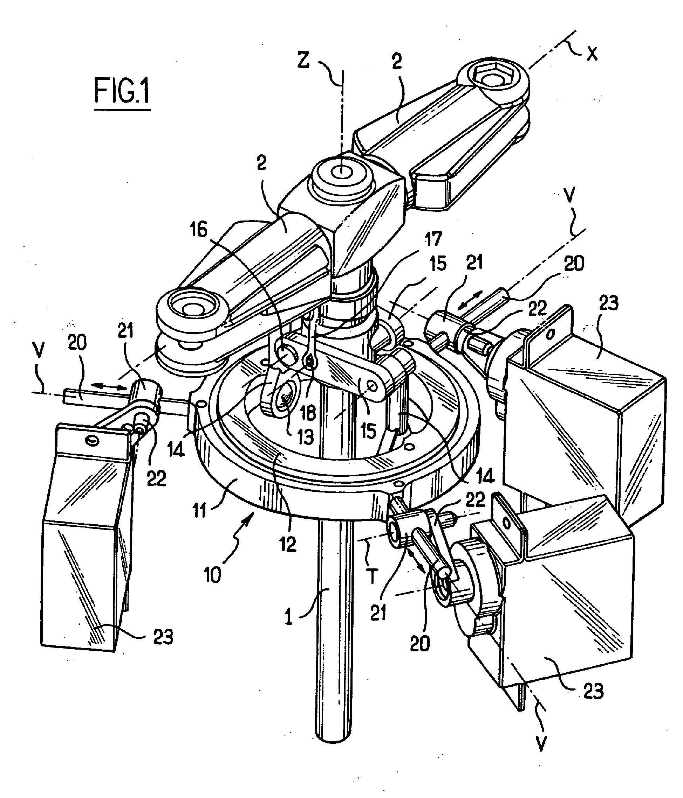

En référence à la figure 1, le rotor selon l'invention comporte un mât rotor 1 tournant selon un axe Z. A son extrémité, le rotor comporte ici deux portes-pale 2, montés tournants sur le rotor selon un axe X s'étendant selon une direction radiale. Les pales (non représentées) sont insérées dans l'extrémité en fourche des portes-pale 2, la rotation de ces derniers selon l'axe X permettant de régler leur incidence.

Le dispositif de commande du rotor comporte un plateau cyclique 10 qui comprend un plateau non tournant 11 et un plateau tournant 12 monté rotatif sur le plateau non tournant 11. Le plateau tournant 12 s'étend ici intérieurement au plateau non tournant 11 et est relié à ce dernier par un roulement à billes.

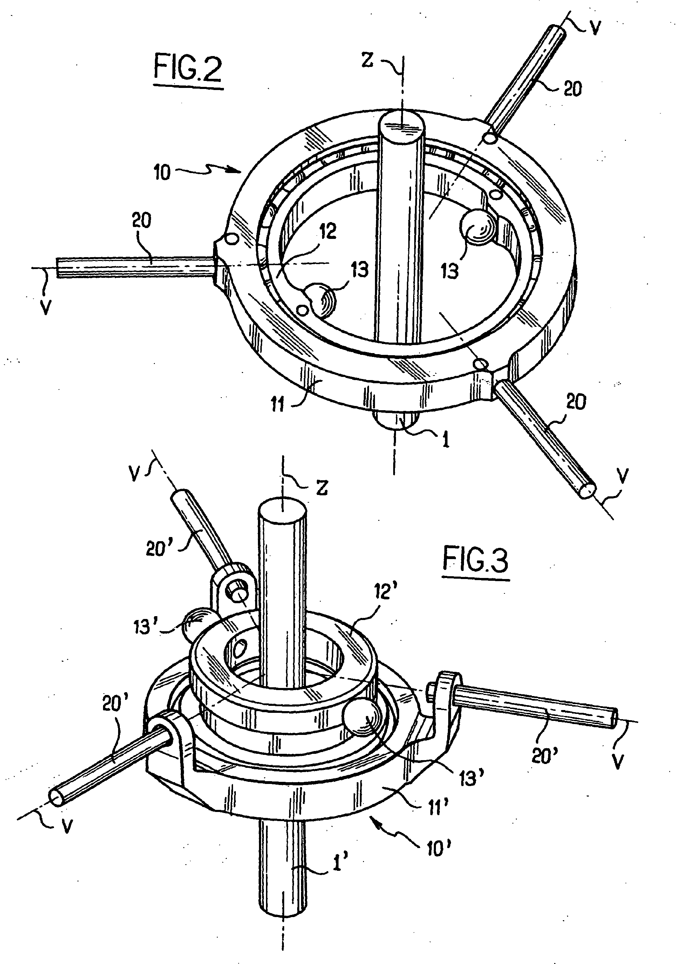

De préférence, le plateau tournant et le plateau non tournant forment eux même, les cages du roulement à billes (que l'on peut distinguer à la figure 2). On pourra cependant interposer entre les billes et les plateaux des chemins de roulement rapportés. Selon une variante, le plateau tournant et le plateau non tournant forment des chemins de roulement pour des galets. De préférence alors, on disposera trois galets maintenus à équidistance. Cette solution est plus légère que l'utilisation d'un roulement à billes. Plus généralement on pourra utiliser d'autres éléments de roulements interposés entre le plateau tournant et le plateau non tournant, comme des rouleaux ou des aiguilles.

Le plateau tournant 12 comporte des rotules 13 qui s'étendent en regard du mât rotor 1 (seule l'une d'elles est visible à la figure 1). Sur ces rotules 13 sont articulées des bielles 14 s'étendant parallèlement au mât rotor 1. L'autre extrémité de chacune des bielles 14 est montée rotative sur l'extrémité d'un levier 15 selon un axe parallèle à l'axe X, tandis que l'autre extrémité de chaque levier 15 est montée rotative sur des pivots 16 du mât rotor 1, qui s'étendent également selon un axe parallèle à l'axe X. Par l'intermédiaire des bielles 14 et des leviers 15, le plateau tournant 12 est ainsi entraîné en rotation avec le mât rotor 1.

Des biellettes d'incidence 17 (une seule est visible ici) s'étendent entre chacun des leviers 15 et le porte-pale 2 en regard, en étant attachées d'une part sur un point d'attache intermédiaire 18 des leviers 15 et d'autre part au porte-pale 2 en regard. Une rotation des leviers 15 autour des pivots 16 induite par un mouvement du plateau cyclique 10 induit une rotation du porte-pale 2 selon l'axe X, et donc une variation de l'incidence de la pale correspondante.

Le plateau non tournant 11 comporte trois tiges 20 qui s'étendent vers l'extérieur à 120 degrés l'une de l'autre, selon des directions radiales V. Sur chacune des tiges sont enfilés des coulisses 21 pouvant se déplacer librement le long des tiges 20, comme indiqué par les flèches. Chacune des coulisses 21 est montée rotative selon un axe T au bout d'une manivelle 22, qui est elle-même solidaire de l'arbre moteur d'un servomoteur 23. L'axe de rotation T de la coulisse 21 est bien entendu parallèle à l'axe de rotation de l'arbre moteur du servomoteur 23 correspondant. Ces axes sont ici perpendiculaires à l'axe Z du mât rotor ainsi qu'à la tige 20 associée.

Il est à noter que les servomoteurs rotatifs 23 sont fixés sur un support (non représenté, pour plus de clarté) qui maintient les servomoteurs 23 sensiblement à la hauteur du plateau cyclique 10 en regard de celui-ci et dans son prolongement latéral, ce qui donne à la commande de l'invention un encombrement en hauteur particulièrement faible, réduit à la hauteur des servomoteurs 23.

Le fonctionnement du rotor selon l'invention est le suivant.

Lorsque l'on désire commander une variation collective de l'incidence des pales, on commande les trois servomoteurs 23 simultanément de façon à imprimer aux manivelles 22 un même angle de rotation. Cette rotation provoque un déplacement des coulisses 21 le long des tiges 20, entraînant une translation du plateau cyclique 10 selon l'axe Z, ce qui provoque une variation simultanée et identique de l'incidence de toutes les pales.

Lorsque l'on désire commander une variation cyclique de l'incidence des pales, on commande les trois servomoteurs 23 de façon à imprimer aux manivelles 22 des angles de rotations différents. Le plateau cyclique 10 s'incline alors, ce qui provoque une variation de l'incidence des pales qui varie cycliquement.

Bien sûr, les deux commandes peuvent être superposées.

Selon un aspect remarquable de l'invention, le dispositif de commande de l'invention ne comporte aucun organe spécifique d'antirotation du plateau non tournant 11. En effet, celui-ci est naturellement arrêté en rotation par ses tiges 20 qui sont retenues par les servomoteurs rotatifs 23.

On remarquera également que le plateau cyclique 10 n'est ici pas centré sur le mât rotor, puisque le mode de liaison du plateau cyclique 10 aux servomoteurs 23 empêche le plateau cyclique 10 de se déplacer librement latéralement. En l'absence de rotule qui centre le plateau cyclique sur le mât rotor, le plateau cyclique est susceptible de se déplacer latéralement au gré des positions angulaires des manivelles 22 ; cependant, ces déplacements latéraux restent petits.

Comme cela est plus particulièrement visible à la figure 2, l'absence de rotule centrale permet un agencement nouveau et particulièrement simple du plateau cyclique 10. Sur cette figure, on distingue clairement que le plateau tournant 12 s'étend à l'intérieur du plateau non tournant 11, le plateau tournant 12 et le plateau tournant 11 formant ici les cages concentriques d'un roulement à billes (que l'on aperçoit entre le plateau tournant 12 et le plateau non tournant 11). Le plateau non tournant 11 reçoit les tiges 20 dans des orifices ménagés sur sa face externe, tandis que le plateau tournant 12 reçoit les rotules 13 sur sa face interne. L'ensemble est particulièrement simple et léger.

Selon une variante illustrée à la figure 3, le plateau cyclique 10' comporte ici un plateau tournant 12' qui est porté par le plateau non tournant 11' en s'étendant par dessus le plan moyen de ce dernier, comme c'est le cas habituellement sur les hélicoptères connus. Ici, les rotules 13' sont portées par le plateau tournant 12' à l'extérieur.

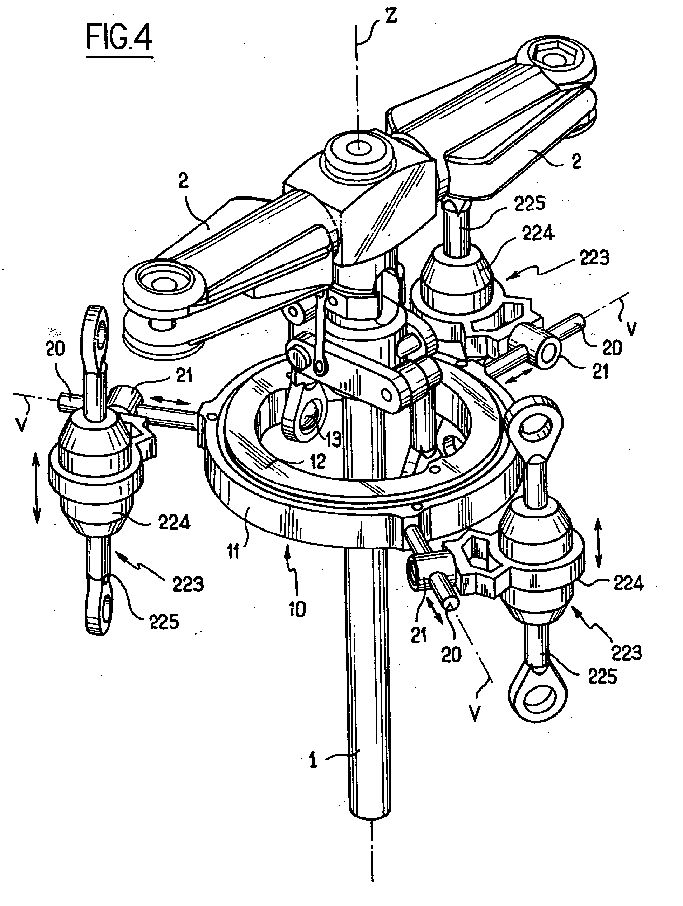

L'invention n'est bien sûr pas limitée à l'utilisation de servomoteurs rotatifs. A la figure 4 est illustrée une variante du dispositif de commande illustré à la figure 1, dans laquelle la seule différence réside dans le fait que les coulisses 21 sont chacune attelées non plus à l'extrémité d'une manivelle, mais au corps mobile 224 d'un actionneur linéaire 223. Les actionneurs 223 sont ici du type hydraulique et comportent une tige 225 traversante dont les deux extrémités sont attelées à un support fixe (non représenté ici) qui maintient les actionneurs en regard du plateau cyclique 10, de façon que leurs corps mobiles et donc les coulisses 21 se déplacent selon une direction sensiblement parallèle à l'axe Z du mât rotor.

Ainsi, dans les deux variantes illustrées, les coulisses 21 sont déplacées par les actionneurs 23,223 selon l'axe Z (avec, dans le cas des servomoteurs rotatifs, une composante de déplacement radiale supplémentaire du fait de la rotation de la manivelle) permettant d'imprimer au plateau cyclique à la fois des mouvements de translation en bloc selon l'axe Z et des mouvements de rotation selon un axe transverse.

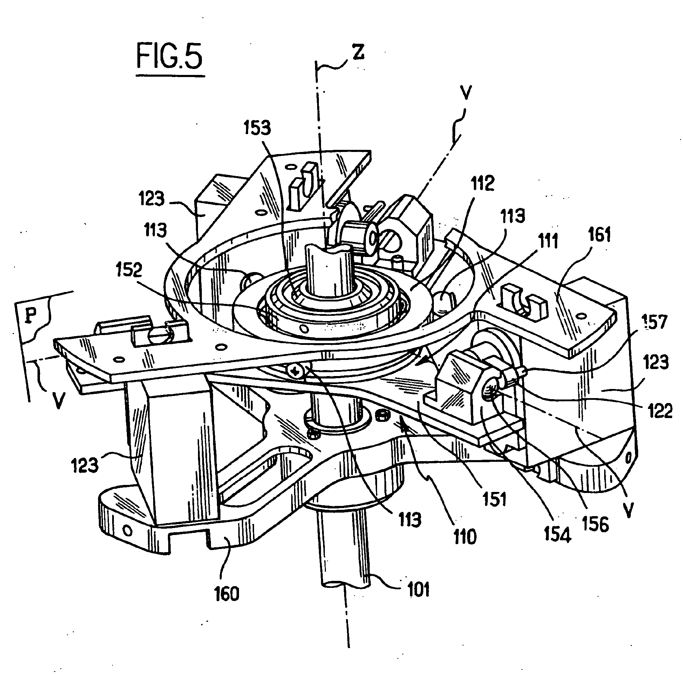

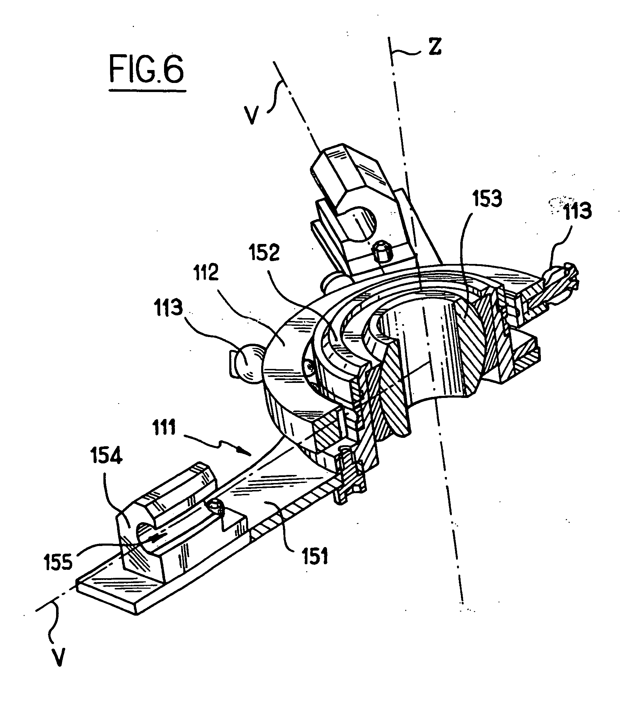

Selon maintenant un deuxième mode de réalisation de l'invention illustré aux figures 5 et 6, sur laquelle la tête de rotor a été enlevée pour plus de clarté, on revient à des servomoteurs rotatifs 123, mais ceux-ci sont liés de façon différente au plateau cyclique 110. Les servomoteurs 123 sont ici reçus sur un premier support 160 centré sur le mât rotor 101, et arrêté en rotation (par des moyens d'antirotation non représentés). Un deuxième support 161 vient coiffer les servomoteurs 123, concourrant à augmenter la rigidité de l'ensemble formé par le premier support 160 et les servomoteurs 123.

Le plateau cyclique 110 comporte comme auparavant un plateau non tournant 111 et un plateau tournant 112. Ici, le plateau non tournant 111 comporte une platine 151 qui comprend trois bras s'étendant en regard des servomoteurs 123. La platine 151 comporte une cheminée centrale 152 qui reçoit intérieurement une rotule 153 de centrage du plateau cyclique sur le mât rotor 101, et qui reçoit extérieurement le plateau tournant 112.

Le plateau tournant 112 reçoit, sur sa face externe, des rotules 113 destinées à recevoir des bielles pour la commande de pales (soit par l'intermédiaire de leviers, comme dans le cas précédent, soit directement en reliant les bielles aux pales. Dans ce dernier cas, il conviendra de prévoir une liaison en rotation entre le plateau tournant 112 et l'arbre rotor 101).

Chacun des bras de la platine 151 reçoit une glissière 154 définissant un chemin radial 155 de section circulaire dans lequel est engagée l'extrémité sphérique 156 d'un doigt 157 fixé à l'extrémité de la manivelle 122 du servomoteur 123 associé.

Ainsi, on a remplacé la liaison glissière du premier mode de réalisation comportant une coulisse montée coulissante sur une tige par la liaison glissière illustrée ici comportant une glissière et un doigt à extrémité sphérique. Ces deux liaisons permettent de transformer un mouvement de rotation de la manivelle en un mouvement de glissement de l'extrémité de la manivelle sur le plateau non tournant, ici le long d'une direction radiale.

On notera que la liaison entre le plateau cyclique 110 et son environnement (supports 160 et 161 des actionneurs, mât rotor 101) est légèrement hyperstatique, du fait de la présence de la rotule de centrage 153. On compte ici sur l'élasticité des pièces, et notamment celle de la platine 151 ou celle des manivelles 122 pour s'accommoder de cette légère hyperstaticité.

La commande selon l'invention est particulièrement compacte, les servomoteurs rotatifs s'étendant sensiblement dans le prolongement du plateau cyclique en regard de celui-ci, et s'inscrivant donc dans une hauteur réduite substantiellement à la hauteur des servomoteurs.

L'invention n'est pas limitée à ce qui vient d'être décrit, mais bien au contraire englobe toute variante entrant dans le cadre défini par les revendications.

En particulier, bien que l'on ait indiqué ici que les liaisons glissières entre la partie mobile des actionneurs et le plateau non tournant s'étendent selon des directions radiales, on pourra prévoir des liaisons glissières selon des axes non forcément radiaux. En particulier, on peut envisager par exemple des actionneurs linéaires dont la partie mobile se déplace selon une direction radiale et coopère avec le plateau non tournant par une glissière ayant une direction contenue dans un plan méridien contenant l'axe Z du mât rotor mais qui s'étend obliquement par rapport à l'axe Z du mât rotor. Ainsi, un déplacement radial de la partie mobile de l'actionneur provoque un déplacement de la partie associée du plateau non tournant selon l'axe Z du rotor.

Bien sûr, tout type de liaison glissière pourra être envisagé dans le cadre de l'invention. En particulier, on pourra prévoir une glissière équipée de patins de glissement à aiguilles, dans laquelle un coulisseau, relié à la partie mobile de l'actionneur par des liaisons adéquates (notamment des liaisons souples), est monté pour coulisser.

Bien que l'on ait indiqué, dans le premier mode de réalisation, que le plateau tournant s'étendait à l'intérieur du plateau non tournant, on pourra bien sûr inverser cette configuration de sorte que le plateau tournant s'étende à l'extérieur du plateau non tournant.

Enfin, il est évident que le dispositif de commande de l'invention s'applique à tout rotor, quel que soit le nombre de pales porté par celui-ci.

## Revendications

1. Dispositif de commande de pales d'un rotor d'hélicoptère ou similaire comportant un mât rotor (1;101) qui supporte les pales, le dispositif de commande comportant :
- un plateau cyclique (10;110) qui s'étend autour du mât rotor et qui comprend d'une part un plateau non tournant (11;111), et d'autre part un plateau tournant (12;112) qui est monté rotatif sur le plateau non tournant et qui tourne avec le rotor en étant relié aux pales ;
- trois actionneurs (23;123;223) pour provoquer le déplacement commandé du plateau tournant à la fois en translation parallèlement au mât rotor et angulairement autour d'axes perpendiculaires au mât rotor ;
**caractérisé en ce que** les trois actionneurs sont disposés sensiblement à hauteur du plateau cyclique dans le prolongement latéral de celui-ci, chaque actionneur comportant une partie mobile (21;21;156) qui est directement reliée au plateau fixe pour former avec ce dernier une liaison glissière de sorte qu'un déplacement de la partie mobile de l'un des actionneurs provoque un déplacement de la partie du plateau non tournant associée selon un axe du mât rotor (Z).

2. Dispositif de commande selon la revendication 1, dans lequel la partie mobile (21;21;156) des actionneurs présente au moins une composante de mouvement selon l'axe (Z) du mât rotor, les liaisons glissières entre lesdites parties mobiles et le plateau non tournant s'étendant selon des directions essentiellement radiales.

3. Dispositif de commande selon la revendication 1, dans lequel les actionneurs sont des actionneurs rotatifs dont la partie mobile est en forme de manivelle (22 ;122) se terminant par un organe de coulissement (21 ;156) qui coopère avec un guide (20 ;154) du plateau tournant pour définir la liaison glissière associée.

4. Dispositif de commande selon la revendication 3, dans lequel l'organe de coulissement.est une coulisse (21) qui est montée pour coulisser sur une tige (20) solidaire du plateau non tournant (11).

5. Dispositif de commande selon la revendication 3, dans lequel l'organe de coulissement est un doigt (157) à extrémité sphérique (156) qui est reçue dans une glissière (154) conforme solidaire du plateau tournant (111).

6. Dispositif de commande selon la revendication 1, dans lequel le plateau cyclique (10) ne comporte pas d'organe de centrage sur le mât rotor.

7. Dispositif de commande selon la revendication 6, dans lequel le plateau tournant (12) et le plateau non tournant (11) forment deux bagues concentriques, le plateau tournant (12) s'étendant à l'intérieur du plateau non tournant (11).

8. Dispositif de commande selon la revendication 7, dans lequel le plateau tournant et le plateau non tournant forment des chemins de roulement pour des éléments de roulement interposés entre le plateau tournant et le plateau non tournant.

9. Dispositif de commande selon la revendication 7, dans lequel le plateau tournant (12) porte sur des rotules (13) d'articulation de bielles de commande des pales, lesdites rotules s'étendant intérieurement au plateau tournant pour être en regard du mât rotor.

## Claims

1. Device for controlling blades of a helicopter or like rotor including a rotor mast (1; 101) that supports the blades, the control device including:
- a swash plate (10; 110) that extends around the rotor mast and that comprises on the one hand a lower swash plate (11; 111) and on the other hand an upper swash plate (12; 112) that is mounted to rotate on the lower swash plate and that turns with the rotor, being connected to the blades;
- three actuators (23; 123; 223) for causing controlled movement of the upper swash plate both in translation parallel to the rotor mast and angularly about axes perpendicular to the rotor mast;
**characterised in that** the three actuators are disposed substantially at the height of the swash plate in lateral alignment therewith, each actuator including a mobile part (21; 21; 156) that is directly connected to the fixed plate to form with the latter a sliding connection so that movement of the mobile part of one of the actuators causes movement of the part of the lower swash plate associated therewith about an axis (Z) of the rotor mast.

2. Control device according to claim 1, wherein the mobile part (21; 21; 156) of the actuators has at least one component of movement along the axis (Z) of the rotor mast, the sliding connections between said mobile parts and the lower swash plate extending in essentially radial directions.

3. Control device according to claim 1, wherein the actuators are rotary actuators the mobile part of which is in the form of a crank (22; 122) ending in a sliding member (21; 156) that cooperates with a guide (20; 154) of the upper swash plate to define the associated sliding connection.

4. Control device according to claim 3, wherein the sliding member is a slider (21) that is mounted to slide on a rod (20) fastened to the lower swash plate (11).

5. Control device according to claim 3, wherein the sliding member is a finger (157) with a spherical end (156) that is received in a slideway (154) of complementary shape fastened to the upper swash plate (111).

6. Control device according to claim 1, wherein the swash plate (10) has no centring member on the rotor mast.

7. Control device according to claim 6, wherein the upper swash plate (12) and the lower swash plate (11) form two concentric rings, the upper swash plate (12) lying inside the lower swash plate (11).

8. Control device according to claim 7, wherein the upper swash plate and the lower swash plate form rolling paths for rolling members placed between the upper swash plate and the lower swash plate.

9. Control device according to claim 7, wherein the upper swash plate (12) carries blade control links on articulation ball joints (13) lying inside the upper swash plate so as to face the rotor mast.

## Patentansprüche

1. Vorrichtung zum Steuern der Blätter eines Rotors eines Helikopters oder dergleichen, wobei der Rotor einen Rotormast (1; 101) umfasst, der die Blätter trägt, wobei die Steuervorrichtung umfasst:
- eine ringförmige Platte (10; 110), die sich um den Rotormasten herum erstreckt und einerseits eine sich nicht drehende Platte (11; 111) und andererseits eine sich drehende Platte (12; 112) umfasst, die drehbar an der sich nicht drehenden Platte gelagert ist und sich mit dem Rotor dreht, indem sie mit den Blättern verbunden ist,
- drei Aktuatoren (23; 123; 223), die dazu bestimmt sind, die gesteuerte Bewegung der sich drehenden Platte zugleich in Translationsrichtung parallel zum Rotormasten und in Winkelrichtung um zum Rotormasten senkrechte Achsen zu bewirken,
**dadurch gekennzeichnet, dass** die drei Aktuatoren im Wesentlichen in Höhe der ringförmigen Platte in deren seitlicher Verlängerung angeordnet sind, wobei jeder Aktuator einen beweglichen Teil (21; 21; 156) umfasst, der direkt mit der feststehenden Platte verbunden ist, um mit dieser letztgenannten eine Gleitverbindung zu bilden, derart, dass eine Verschiebung des beweglichen Teils eines der Aktuatoren eine Verschiebung des mit ihm verbundenen Abschnitts der sich nicht drehenden Platte entlang einer Achse (Z) des Rotormasten bewirkt.

2. Steuervorrichtung nach Anspruch 1, wobei der bewegliche Teil (21; 21; 156) der Aktuatoren mindestens eine Bewegungskomponente entlang der Achse (Z) des Rotormasten aufweist, wobei sich die Gleitverbindungen zwischen den genannten beweglichen Teilen und der sich nicht drehenden Platte in im Wesentlichen radialen Richtungen erstrecken.

3. Steuervorrichtung nach Anspruch 1, wobei die Aktuatoren Drehaktuatoren sind, deren beweglicher Teil die Form einer Kurbel (22; 122) hat, die in einem Gleitelement (21; 156) endet, das mit einer Führung (20; 154) der sich nicht drehenden Platte zusammenwirkt, um die dazugehörige Gleitverbindung zu definieren.

4. Steuervorrichtung nach Anspruch 3, wobei das Gleitelement ein Schieber (21) ist, der verschiebbar auf einer fest mit der sich nicht drehenden Platte (11) verbundenen Stange (20) gelagert ist.

5. Steuervorrichtung nach Anspruch 3, wobei das Gleitelement ein Zapfen (157) mit kugelförmigem Ende (156) ist, der in einer entsprechend ausgebildeten Gleitbahn (154) aufgenommen ist, die fest mit der sich nicht drehenden Platte (111) verbunden ist.

6. Steuervorrichtung nach Anspruch 1, wobei die ringförmige Platte (10) kein Zentrierelement zur Zentrierung auf den Rotormasten umfasst.

7. Steuervorrichtung nach Anspruch 6, wobei die sich drehende Platte (12) und die sich nicht drehende Platte (11) zwei konzentrische Ringe bilden, wobei die sich drehende Platte (12) innerhalb der sich nicht drehenden Platte (11) liegt.

8. Steuervorrichtung nach Anspruch 7, wobei die sich drehende Platte und die sich nicht drehende Platte Rollbahnen für Rollelemente bilden, die zwischen der sich drehenden Platte und der sich nicht drehenden Platte angeordnet sind.

9. Steuervorrichtung nach Anspruch 7, wobei die sich drehende Platte (12) auf Kugelgelenken (13) gelagerte Steuerstangen zum Steuern der Blätter trägt, wobei die genannten Kugelgelenke innerhalb der sich drehenden Platte liegen, damit sie sich gegenüber dem Rotormast befinden.
